# EUROPEAN PATENT SPECIFICATION

(11) **EP 4 242 030 B1**
(45) Date of publication and mention of the grant of the patent: **26.11.2025**
(21) Application number: 22213179.9
(22) Date of filing: 13.12.2022
(51) Int. Cl.: B60K 6/387, B60K 6/40, B60K 6/405, B60K 6/445, B60K 6/52, B60K 6/547, B60W 10/30, B60K 11/00, B60K 1/02, B60K 6/22, F01P 3/00, F01P 3/12, F01P 5/12, F01P 7/14, B60K 6/26, B60K 11/02, B60K 1/00, B60K 6/54, F16N 7/00

(54) **WORK VEHICLE**
ARBEITSFAHRZEUG
VÉHICULE DE TRAVAIL

(30) Priority: 11.03.2022 JP 2022038614
(43) Date of publication of application: 13.09.2023
(73) Proprietor: Kubota Corporation, Osaka-shi, Osaka 5568601 (JP)
(72) Inventor: HIRASE, Yuji, SAKAI-SHI, OSAKA 5900908 (JP); YAGYU, Sumio, SAKAI-SHI, OSAKA 5900908 (JP); OKAZAKI, Kazuto, SAKAI-SHI, OSAKA 5900908 (JP); II, Tsunehiro, SAKAI-SHI, OSAKA 5900908 (JP)
(74) Representative: Cabinet Beau de Loménie

(56) References cited:
- EP-A1- 3 885 545
- ES-T3- 2 875 732
- JP-A- 2002 004 860
- JP-B2- 3 728 855
- US-A1- 2019 299 770
- US-B1- 6 450 275
- US-B2- 11 192 444

## Description

### BACKGROUND OF THE INVENTION

### 1. Field of the Invention

The present invention relates to a hybrid work vehicle including a transmission.

### 2. Description of the Related Art

As disclosed in Patent Literature 1, as a tractor as an example of a work vehicle, there is such a tractor including a hybrid transmission configured to vary power from an engine and output the power to a travel device. The hybrid transmission includes an electric transmission portion including a motor generator, and a gear transmission portion including a gear driving mechanism.

### Citation List

### Patent Literature

Patent Literature 1: Japanese Unexamined Patent Application Publication No. 2014-65349
Patent Literature 2: ES 2 875 732 T3, disclosing a vehicle with a cooling system.
Patent Literature 3: JP 3728855 B2, disclosing a cooling device for a vehicle.

### SUMMARY OF THE INVENTION

### Technical Problem

In a case where the electric transmission portion is provided like Patent Literature 1, it is necessary to cool the motor generator. Since an inverter for the motor generator is provided, it is also necessary to cool the inverter.

An object of the present invention is to achieve simplification of a cooling structure for a motor generator and an inverter in a hybrid work vehicle.

### Solution to Problem

A work vehicle according to the present invention includes: an engine; a travel device; a battery; a hybrid transmission configured to vary power from the engine and output the power to the travel device, the hybrid transmission including an electric transmission portion including a motor generator, and a gear transmission portion including a gear driving mechanism; an inverter configured to drive the motor generator; and a pump configured to cool the inverter by supplying, to the inverter, a refrigerant for cooling the motor generator.

In the present invention, the refrigerant for cooling the motor generator is supplied to the inverter by the pump, so that the inverter is cooled by the refrigerant.

Hereby, the refrigerant for cooling the motor generator is also used for cooling the inverter. Accordingly, it is not necessary to separately prepare the refrigerant for cooling the motor generator and the refrigerant for cooling the inverter, thereby making it possible to achieve simplification of the structure.

In the present invention, the work vehicle includes an accumulation portion configured to store the refrigerant, and a supply portion configured to supply the refrigerant to the motor generator. The pump causes the refrigerant in the accumulation portion to be supplied to the inverter, from the inverter to the supply portion, and from the supply portion to the motor generator, and to return from the motor generator to the accumulation portion.

It is necessary to cool the inverter, out of the motor generator and the inverter, to be a lower temperature.

In the present invention, the refrigerant in the accumulation portion is supplied to the inverter to cool the inverter. Subsequently, the refrigerant is supplied from the inverter to the supply portion, supplied from the supply portion to the motor generator to cool the motor generator, and returns from the motor generator to the accumulation portion.

Since the inverter is cooled by the refrigerant earlier than the motor generator, it is possible to sufficiently cool the inverter.

In the present invention, the electric transmission portion and the gear transmission portion are separated from each other; the accumulation portion is the electric transmission portion; the refrigerant is a lubricant accumulated in the electric transmission portion; and the lubricant accumulated in the electric transmission portion is different from a lubricant accumulated in the gear transmission portion.

In the present invention, the lubricant is used as the refrigerant, and by supplying the lubricant to the motor generator, it is possible to lubricate a bearing for the motor generator or a speed-increasing or reduction gear in addition to cooling of the motor generator.

The electric transmission portion and the gear transmission portion are separated from each other, and the electric transmission portion serves as the accumulation portion for the lubricant. Accordingly, it is not necessary to provide an exclusive oil tank or the like for accumulating the lubricant. This is advantageous for simplification of the structure.

In a case where the lubricant is used as the refrigerant, in the electric transmission portion, it is preferable to use a lubricant with a relatively low viscosity so that the lubricant does not disturb the motor generator and the motor generator is easily cooled.

In the gear transmission portion, lubrication has priority over cooling. Accordingly, it is preferable to accumulate a lubricant with a relatively high viscosity so that an oil film of the lubricant easily remains in gears of the gear driving mechanism.

In the present invention, the electric transmission portion and the gear transmission portion are separated from each other, and the lubricant for cooling the motor generator is set to be different from the lubricant accumulated in the gear transmission portion.

Hereby, even in a case where the lubricant preferable for cooling of the motor generator in the electric transmission portion and the lubricant preferable for lubrication of the gear driving mechanism in the gear transmission portion are set, those lubricants are not mixed with each other. Accordingly, it is possible to easily maintain coolability for the motor generator and lubrication for the gear driving mechanism.

When small waste caused in the gear transmission portion mixes in the lubricant for cooling the motor generator, an insulation portion in the motor generator may be damaged.

In the present invention, the electric transmission portion and the gear transmission portion are separated from each other, so that such contamination is hard to occur. This is also advantageous for improvement of durability of the motor generator.

In the present invention, it is preferable that the work vehicle include an oil cooler provided on a supply passage for the lubricant from the electric transmission portion to the inverter.

In the present invention, the lubricant in the electric transmission portion is supplied to the inverter after the lubricant is cooled by the oil cooler. This is advantageous for cooling of the inverter and is also advantageous for cooling of the motor generator.

### BRIEF DESCRIPTION OF THE DRAWINGS

Fig. 1 is a left side view of a tractor;
Fig. 2 is a schematic view illustrating the inside of a hybrid transmission;
Fig. 3 is a plan view of an inverter; and
Fig. 4 is a left side view of a longitudinal section of the inverter.

### DESCRIPTION OF THE PREFERRED EMBODIMENTS

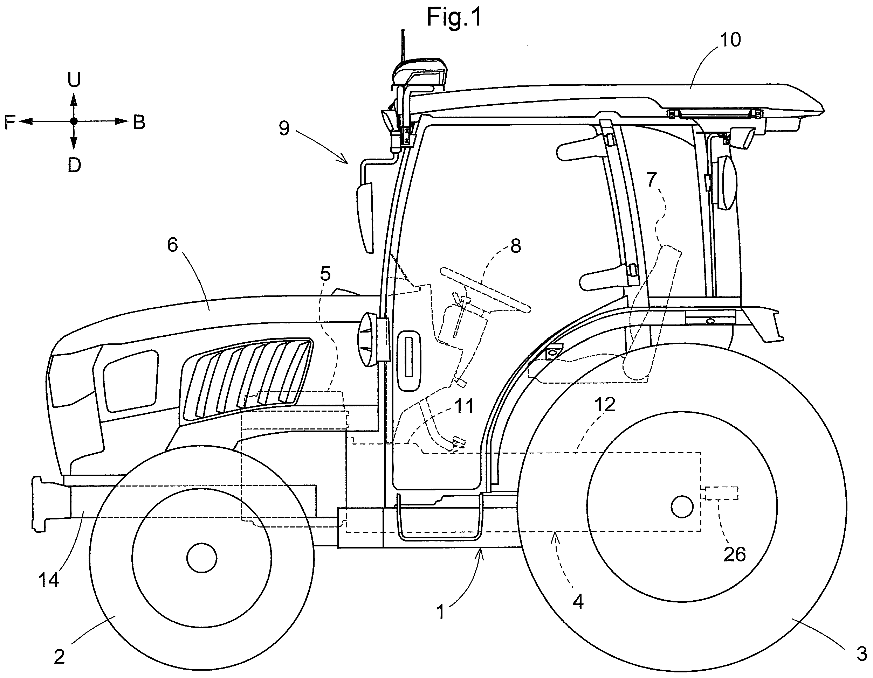

A tractor as an example of a work vehicle is illustrated in Figs. 1 to 4. In Figs. 1 to 4, F indicates a front direction, B indicates a rear direction, U indicates an upper direction, D indicates a lower direction, R indicates a right direction, and L indicates a left direction.

### (Overall Configuration of Tractor)

As illustrated in Fig. 1, a body 1 is supported by right and left front wheels 2 (corresponding to travel devices) and right and left rear wheels 3 (corresponding to travel devices). The body 1 has a front part provided with a bonnet 6, and the body 1 has a rear part provided with a driving portion 9.

The body 1 includes an engine 5, a clutch housing 11 (corresponding to an electric transmission portion) (corresponding to an accumulation portion) connected to a rear part of the engine 5, a transmission case 12 (corresponding to a gear transmission portion) connected to a rear part of the clutch housing 11, a front frame 14 connected to a front part of the engine 5, and so on. A hybrid transmission 4 is constituted by the clutch housing 11 and the transmission case 12.

The front wheels 2 are supported by the front frame 14, and the rear wheels 3 are supported by a rear part of the transmission case 12. The engine 5 is covered with the bonnet 6. The driving portion 9 is covered with a cabin 10, and the driving portion 9 includes a driver seat 7 and a control wheel 8 by which the front wheels 2 are steered.

### (Configuration of Clutch Housing)

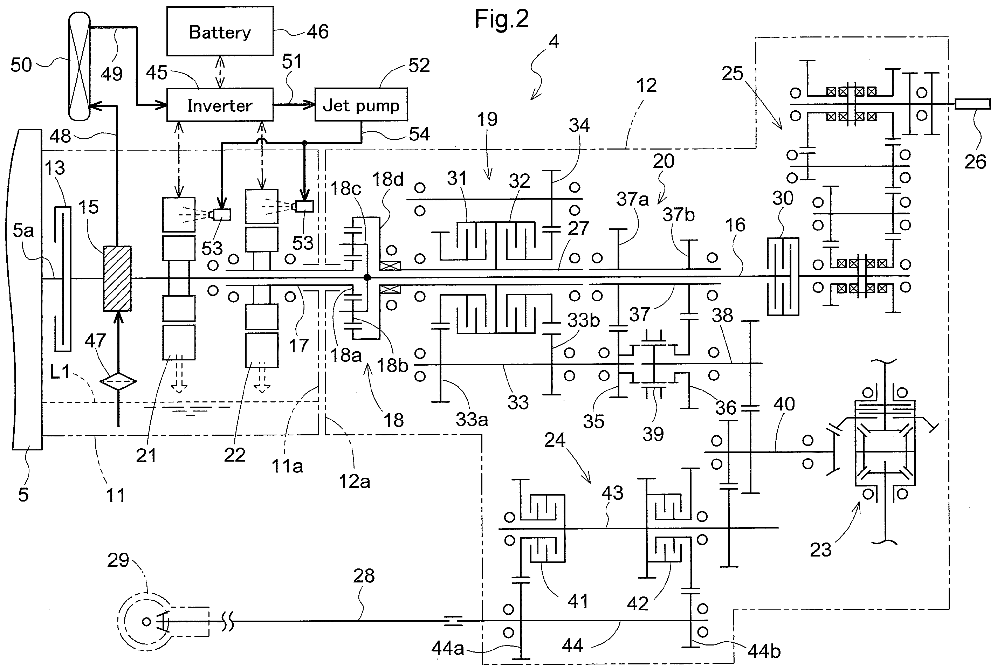

As illustrated in Fig. 2, inside the clutch housing 11, a clutch 13, a hydraulic pump 15 (corresponding to a pump), a first motor generator 21 (corresponding to a motor generator), and a second motor generator 22 (corresponding to a motor generator) are provided.

The clutch 13 is connected to an output shaft 5a of the engine 5, a transmission shaft 16 is connected to the clutch 13 and extends from the inside of the clutch housing 11 to a rear part of the inside of the transmission case 12. A cylindrical shaft 17 is rotatably attached to the transmission shaft 16 and extends from the inside of the clutch housing 11 into a front part of the inside of the transmission case 12. The hydraulic pump 15 and the first motor generator 21 are attached to the transmission shaft 16, and the second motor generator 22 is attached to the cylindrical shaft 17.

### (Configuration of Transmission Case)

As illustrated in Fig. 2, inside the transmission case 12, a planetary device 18 (corresponding to a gear driving mechanism), a forward-reverse switching device 19 (corresponding to a gear driving mechanism), a sub-transmission 20 (corresponding to a gear driving mechanism), a rear-wheel differential device 23 (corresponding to a gear driving mechanism), a front-wheel transmission 24 (corresponding to a gear driving mechanism), a PTO clutch 30, a PTO transmission 25 (corresponding to a gear driving mechanism), and a PTO shaft 26 are provided.

Power from the engine 5 (or power from the first motor generator 21) is transmitted to the planetary device 18 and changed in speed, transmitted from the forward-reverse switching device 19 to the sub-transmission 20, and then transmitted to the rear wheels 3 via the rear-wheel differential device 23. Power branching right before the rear-wheel differential device 23 is transmitted to the front-wheel transmission 24, transmitted from a transmission shaft 28 to a front-wheel differential device 29, and then transmitted to the front wheels 2 via the front-wheel differential device 29.

The power from the engine 5 (or the power from the first motor generator 21) is transmitted to the PTO transmission 25 via the transmission shaft 16 and the PTO clutch 30 and changed in speed and then transmitted to the PTO shaft 26 provided in the rear part of the transmission case 12.

The inside of the clutch housing 11 and the inside of the transmission case 12 are separated from each other by a wall portion 11a of the rear part of the clutch housing 11 and a wall portion 12a of a front part of the transmission case 12. The transmission shaft 16 and the cylindrical shaft 17 penetrate through the wall portion 11a of the clutch housing 11 and the wall portion 12a of the transmission case 12.

### (Configuration of Planetary Device)

As illustrated in Fig. 2, the planetary device 18 includes a sun gear 18a, a plurality of planetary gears 18b, a carrier 18c, a ring gear 18d, and so on.

In the planetary device 18, the sun gear 18a is connected to the cylindrical shaft 17. The carrier 18c is connected to the transmission shaft 16, the planetary gears 18b are rotatably supported by the carrier 18c, and the sun gear 18a meshes with the planetary gears 18b. The cylindrical shaft 27 is rotatably attached to the transmission shaft 16. The ring gear 18d is connected to the cylindrical shaft 27, and the planetary gears 18b mesh with the ring gear 18d.

The power from the engine 5 (or the power from the first motor generator 21) is transmitted to the carrier 18c of the planetary device 18, and the power from the second motor generator 22 is transmitted to the sun gear 18a of the planetary device 18. In a planetary device 18, the power from the engine 5 (or the power from the first motor generator 21) and the power from the second motor generator 22 are combined and changed in speed, and the combined power is transmitted from the ring gear 18d of the planetary device 18 to the cylindrical shaft 27.

### (Configuration of Forward-reverse Switching Device)

As illustrated in Fig. 2, the forward-reverse switching device 19 includes a forward clutch 31, a reverse clutch 32, a transmission shaft 33, a relay gear 34, and so on.

The forward clutch 31 and the reverse clutch 32 are attached to the cylindrical shaft 27. The transmission shaft 33 is provided in parallel with the cylindrical shaft 27, and transmission gears 33a, 33b are connected to the transmission shaft 33. The forward clutch 31 includes an output gear meshing with the transmission gear 33a of the transmission shaft 33. The reverse clutch 32 includes an output gear meshing with the relay gear 34, and the relay gear 34 meshes with the transmission gear 33b of the transmission shaft 33.

In the forward-reverse switching device 19, when the forward clutch 31 is operated into a transmission state, the power from the cylindrical shaft 27 is transmitted to the transmission shaft 33 in a forward-travel state via the forward clutch 31. When the reverse clutch 32 is operated into a transmission state, the power from the cylindrical shaft 27 is transmitted to the transmission shaft 33 in a reverse-travel state via the reverse clutch 32 and the relay gear 34.

### (Configuration of Sub-transmission)

As illustrated in Fig. 2, the sub-transmission 20 includes a high gear 35, a low gear 36, a cylindrical shaft 37, a transmission shaft 38, a shift member 39, and so on.

The high gear 35 is connected to the transmission shaft 33. The cylindrical shaft 37 is rotatably attached to the transmission shaft 16, transmission gears 37a, 37b are connected to the cylindrical shaft 37, and the high gear 35 meshes with the transmission gear 37a of the cylindrical shaft 37.

The transmission shaft 38 is provided coaxially with the transmission shaft 33 and the high gear 35, and the shift member 39 is provided in the transmission shaft 38. The low gear 36 is rotatably attached to the transmission shaft 38, and the low gear 36 meshes with the transmission gear 37b of the cylindrical shaft 37.

In the sub-transmission 20, when the shift member 39 is slid to mesh with the high gear 35, the transmission shaft 33 is connected to the transmission shaft 38, so that the power from the transmission shaft 33 is transmitted to the transmission shaft 38 in a high-speed state. When the shift member 39 is slid to mesh with the low gear 36, the power from the transmission shaft 33 is transmitted to the transmission shaft 38 in a low-speed state via the high gear 35, the cylindrical shaft 37, and the low gear 36.

The power transmitted to the transmission shaft 38 is transmitted from a rear-wheel output shaft 40 to the rear-wheel differential device 23 and transmitted from the rear-wheel differential device 23 to the rear wheels 3.

### (Configuration of Front-wheel Transmission)

As illustrated in Fig. 2, the front-wheel transmission 24 includes a standard clutch 41, a speed increasing clutch 42, a transmission shaft 43, a front-wheel output shaft 44, and so on.

The standard clutch 41 and the speed increasing clutch 42 are attached to the transmission shaft 43, and the power from the rear-wheel output shaft 40 is transmitted to the transmission shaft 43. The front-wheel output shaft 44 is provided in parallel with the transmission shaft 43, and transmission gears 44a, 44b are connected to the front-wheel output shaft 44. The standard clutch 41 includes an output gear meshing with the transmission gear 44a of the front-wheel output shaft 44, and the speed increasing clutch 42 includes an output gear meshing with the transmission gear 44b of the front-wheel output shaft 44.

When the front wheels 2 are operated within a range of right and left setting angles from a straight travel position, the standard clutch 41 is operated into a transmission state in the front-wheel transmission 24.

The power from the rear-wheel output shaft 40 is transmitted to the front-wheel output shaft 44 via the transmission shaft 43 and the standard clutch 41 and transmitted to the front wheels 2 via the transmission shaft 28 and the front-wheel differential device 29, so that the front wheels 2 and the rear wheels 3 are driven at the same speed.

When the front wheels 2 are steered to right or left beyond the right and left setting angles, the speed increasing clutch 42 is operated into a transmission state in the front-wheel transmission 24.

The power from the rear-wheel output shaft 40 is transmitted to the front-wheel output shaft 44 via the transmission shaft 43 and the speed increasing clutch 42 and transmitted to the front wheels 2 via the transmission shaft 28 and the front-wheel differential device 29, so that the front wheels 2 are driven at a speed higher than the rear wheels 3.

### (Configuration related to First Motor Generator and Second Motor Generator)

As illustrated in Fig. 2, an inverter 45 and a battery 46 are provided for the first motor generator 21 and the second motor generator 22.

In a case where the first motor generator 21 (the second motor generator 22) works as a motor and provides power to the transmission shaft 16 (the cylindrical shaft 17), direct-current power of the battery 46 is converted into alternating-current power by the inverter 45 and supplied to the first motor generator 21 (the second motor generator 22), so that the first motor generator 21 (the second motor generator 22) works as the motor (a drive mode).

In a case where the first motor generator 21 (the second motor generator 22) is driven to work as a generator, alternating-current power generated in the first motor generator 21 (the second motor generator 22) is converted into direct-current power by the inverter 45 and charged in the battery 46 (a charging mode).

Based on the state of a work device (not illustrated) to be attached to the body 1, the traveling state of the body 1, or the like, the charging mode and the drive mode of the first motor generator 21 and the charging mode and the drive mode of the second motor generator 22 are set by a control device (not illustrated).

In this case, a state where the first motor generator 21 is set to the charging mode and the second motor generator 22 is set to the drive mode is a basic traveling state.

In the basic traveling state, the power from the engine 5 is transmitted to the carrier 18c of the planetary device 18, and the power from the second motor generator 22 is transmitted to the sun gear 18a of the planetary device 18, so that the power from the engine 5 is combined with the power from the second motor generator 22 in the planetary device 18, and the combined power is transmitted from the ring gear 18d of the planetary device 18 to the cylindrical shaft 27.

Traveling is also performable in the drive modes of the first motor generator 21 and the second motor generator 22 while the engine 5 is stopped by operating the clutch 13 into a cut-off state.

### (Lubricant in Clutch Housing and Lubricant in Transmission Case)

As illustrated in Fig. 2, a lubricant with a relatively low viscosity (corresponding to a refrigerant) is accumulated in a bottom portion of the clutch housing 11. The amount of the lubricant is set such that an oil level L1 of the lubricant accumulated in the clutch housing 11 stays at a low position at which the lubricant does not make contact with the first motor generator 21 and the second motor generator 22.

In the transmission case 12, a lubricant with a viscosity higher than the viscosity of the lubricant in the clutch housing 11 is accumulated. A sufficient amount of the lubricant is accumulated in the transmission case 12 such that the oil level of the lubricant accumulated in the transmission case 12 is higher than the oil level L1 of the lubricant in the clutch housing, and the transmission case 12 serves as an oil bath.

With the above configuration, the lubricant accumulated in the clutch housing 11 (the lubricant used to cool the first motor generator 21 and the second motor generator 22) is set to be different from the lubricant accumulated in the transmission case 12.

The inside of the clutch housing 11 and the inside of the transmission case 12 are separated from each other by the wall portion 11a of the rear part of the clutch housing 11 and the wall portion 12a of the front part of the transmission case 12. Hereby, the lubricant accumulated in the clutch housing 11 (the lubricant used to cool the first motor generator 21 and the second motor generator 22) is not mixed with the lubricant accumulated in the transmission case 12.

### (Configuration related to Cooling and Lubrication of First Motor Generator and Second Motor Generator)

As illustrated in Fig. 2, the hydraulic pump 15 is driven by the transmission shaft 16, and the lubricant in the clutch housing 11 is sucked by the hydraulic pump 15 through a filter 47 with a relatively fine weave.

The lubricant sucked by the hydraulic pump 15 is supplied from the hydraulic pump 15 to an oil cooler 50 through a supply passage 48 such that the lubricant is cooled. The lubricant cooled by the oil cooler 50 is supplied to the inverter 45 through a supply passage 49 and cools the inverter 45.

In the present embodiment, inside the clutch housing 11, a plurality of jet nozzles 53 (corresponding to a supply portion) is provided to face each part of the first motor generator 21 and each part of the second motor generator 22, and a jet pump 52 (corresponding to a supply portion) is provided for the jet nozzles 53. In this case, the jet nozzles 53 may be configured to supply the lubricant to each part of the first motor generator 21 and each part of the second motor generator 22 without the jet pump 52.

The lubricant that has cooled the inverter 45 is supplied to the jet pump 52 through a supply passage 51 and is supplied from the jet pump 52 to the jet nozzles 53 through a supply passage 54. The lubricant is supplied from the jet nozzles 53 to each part of the first motor generator 21 and each part of the second motor generator 22, so that the first motor generator 21 and the second motor generator 22 are cooled and lubricated.

The lubricant that has cooled and lubricated the first motor generator 21 and the second motor generator 22 naturally falls from the first motor generator 21 and the second motor generator 22 and returns to the bottom portion of the clutch housing 11.

With the above configuration, the lubricant in the clutch housing 11 (the electric transmission portion) is supplied by the hydraulic pump 15 to the inverter 45 and then supplied from the inverter 45 to the jet pump 52 (the supply portion) and the jet nozzles 53 (the supply portions).

The lubricant is supplied from the jet pump 52 (the supply portion) and the jet nozzles 53 (the supply portions) to the first motor generator 21 and the second motor generator 22 and returns from the first motor generator 21 and the second motor generator 22 to the clutch housing 11 (the electric transmission portion).

The oil cooler 50 configured to cool the lubricant is provided on the supply passages 48, 49 for the lubricant from the clutch housing 11 (the electric transmission portion) to the inverter 45.

### (Configuration of Inverter)

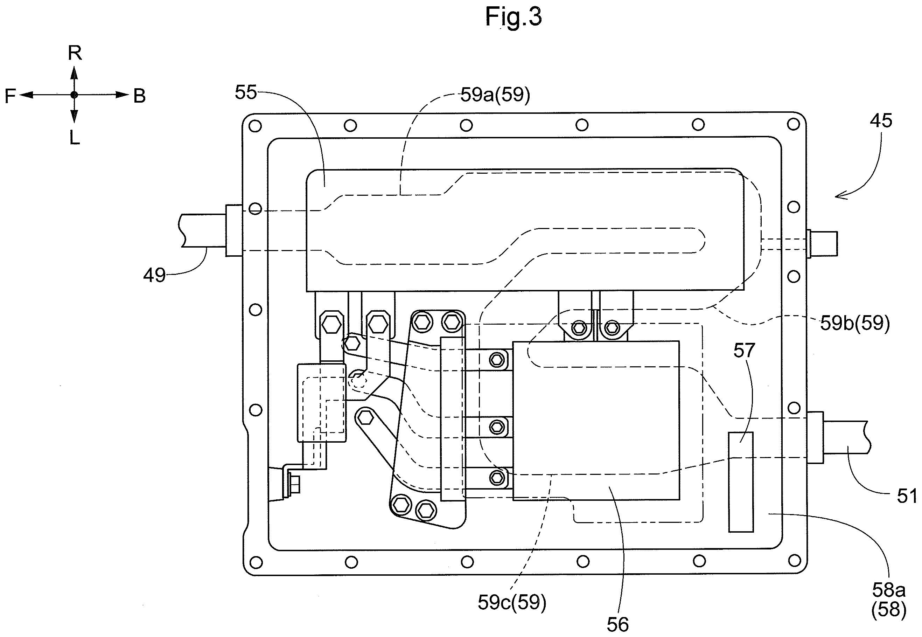

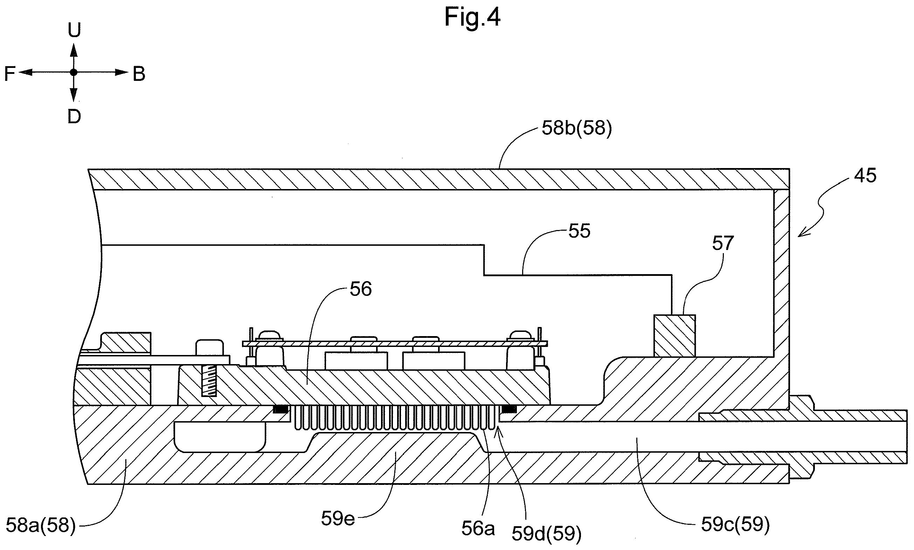

As illustrated in Figs. 3, 4, the inverter 45 includes a capacitor 55, an IGBT 56 as an example of a power transistor, a resistor 57, and so on. The capacitor 55, the IGBT 56, the resistor 57, and so on are accommodated in a case 58.

The case 58 includes a board member 58a and a cover portion 58b. Inside the board member 58a of the case 58, a cooling passage 59 through which the lubricant passes is provided, and the cooling passage 59 includes a first part 59a, a second part 59b, and a third part 59c.

The first part 59a of the cooling passage 59 is formed rearward along the front-rear direction from a front part of the board member 58a of the case 58, and the supply passage 49 (see FIG. 2) is connected to a front part of the first part 59a of the cooling passage 59.

The second part 59b of the cooling passage 59 is formed by changing the direction of a rear part of the first part 59a of the cooling passage 59 by 180 degrees and is directed forward along the front-rear direction. The third part 59c of the cooling passage 59 is formed by changing the direction of a front part of the second part 59b of the cooling passage 59 by 180 degrees and is directed rearward along the front-rear direction. The supply passage 51 (see FIG. 2) is connected to a rear part of the third part 59c of the cooling passage 59.

In the board member 58a of the case 58, the capacitor 55 is attached to a part corresponding to the first part 59a and an upper part of the second part 59b of the cooling passage 59. In the board member 58a of the case 58, the IGBT 56 and the resistor 57 are attached to a part corresponding to an upper part of the third part 59c of the cooling passage 59.

As illustrated in Fig. 4, the third part 59c of the cooling passage 59 has an upper part where an opening 59d is opened, and the IGBT 56 is provided in the opening 59d of the cooling passage 59. The IGBT 56 has a lower part where a plurality of pin fins 56a as a heat sink is provided to face downward, and the pin fins 56a of the IGBT 56 enter the third part 59c from the opening 59d of the cooling passage 59. The third part 59c of the cooling passage 59 has a lower part where a projecting portion 59e projecting upward is provided in a part facing the opening 59d of the cooling passage 59.

With the above configuration, as illustrated in Figs. 2, 3, 4, the lubricant is supplied from the oil cooler 50 to the first part 59a of the cooling passage 59 through the supply passage 49. When the lubricant passes from the first part 59a to the second part 59b in the cooling passage 59, the capacitor 55 is cooled.

The lubricant enters the third part 59c from the second part 59b of the cooling passage 59. Due to the projecting portion 59e of the cooling passage 59, the lubricant comes closer to the pin fins 56a of the IGBT 56, so that the IGBT 56 is sufficiently cooled (heat of the IGBT 56 is absorbed by the lubricant).

The lubricant that has passed the projecting portion 59e of the cooling passage 59 reaches the position of the resistor 57, so that the resistor 57 is cooled. The lubricant that has come out of the third part 59c of the cooling passage 59 is supplied to the jet pump 52 through the supply passage 51.

### (First Modification of Invention)

Instead of providing the first motor generator 21 and the second motor generator 22, one motor generator (not illustrated) may be provided in the clutch housing 11. In this configuration, the motor generator should be provided in the transmission shaft 16.

### (Second Modification of Invention)

Instead of accumulating the lubricant in the bottom portion of the clutch housing 11, an oil tank (not illustrated) in which the lubricant is accumulated may be provided separately from the clutch housing 11.

### (Third Modification of Invention)

A case (not illustrated) covering the first motor generator 21 (the second motor generator 22) may be provided separately from the clutch housing 11, and the first motor generator 21 (the second motor generator 22) may be cooled by passing a refrigerant through the inside of the case.

With this configuration, as the refrigerant for cooling the first motor generator 21 (the second motor generator 22) and the inverter 45, a coolant can be used.

### (Fourth Modification of Invention)

The hydraulic pump 15 and the jet pump 52 may not be provided, and an electric oil pump (not illustrated) (corresponding to a pump) may be provided on the supply passage 49.

With this configuration, the pressure of the lubricant can be set to be high on the downstream side from the supply passage 49, so that the lubricant smoothly flows in the cooling passage 59 of the inverter 45. Accordingly, even without the jet pump 52, the lubricant is supplied from the jet nozzles 53 to each part of the first motor generator 21 and each part of the second motor generator 22 without difficulty.

### (Fifth Modification of Invention)

A pump (not illustrated) and a supply passage (not illustrated) for supplying the lubricant accumulated in the clutch housing 11 to the inverter 45 to cool the inverter 45 may be independently provided to be separated from a pump (not illustrated) and a supply passage (not illustrated) for supplying the lubricant accumulated in the clutch housing 11 to the first motor generator 21 and the second motor generator 22 to cool the first motor generator 21 and the second motor generator 22.

Hereby, the lubricant accumulated in the clutch housing 11 is used both for cooling the inverter 45 and for cooling the first motor generator 21 and the second motor generator 22.

### Industrial Applicability

The present invention is not limited to a tractor and is also applicable to a work vehicle for loading and transporting goods, a work vehicle for pulling a bogie or the like, and a work vehicle for construction such as a wheel loader, and the present invention is also applicable to a work vehicle equipped with a crawler travel device instead of the front wheels and the rear wheels.

### Description of the Reference Numerals

- 2: front wheel (travel device)
- 3: rear wheel (travel device)
- 4: hybrid transmission
- 5: engine
- 11: clutch housing (electric transmission portion) (accumulation portion)
- 12: transmission case (gear transmission portion)
- 15: hydraulic pump (pump)
- 18: planetary device (gear driving mechanism)
- 19: forward-reverse switching device (gear driving mechanism)
- 20: sub-transmissions (gear driving mechanism)
- 21: first motor generator (motor generator)
- 22: second motor generator (motor generator)
- 23: rear-wheel differential device (gear driving mechanism)
- 24: front-wheel transmission (gear driving mechanism)
- 25: PTO transmission (gear driving mechanism)
- 45: inverter
- 46: battery
- 48: supply passage
- 49: supply passage
- 50: oil cooler
- 52: jet pump (supply portion)
- 53: jet nozzle (supply portion)

## Claims

1. A work vehicle comprising:
an engine (5);
a travel device (3);
a battery (46);
a hybrid transmission (4) configured to vary power from the engine (5) and output the power to the travel device (3), the hybrid transmission (4) including an electric transmission portion (11) including a motor generator (21, 22), and a gear transmission portion (12) including a gear driving mechanism (18, 19, 20, 23, 24, 25);
an inverter (45) configured to drive the motor generator (21, 22); and
a pump (15) configured to cool the inverter (45) by supplying, to the inverter (45), a refrigerant for cooling the motor generator (21, 22),
an accumulation portion (11) configured to store the refrigerant; and
a supply portion (52, 53) configured to supply the refrigerant to the motor generator (21, 22), wherein
the pump (15) is configured to cause the refrigerant in the accumulation portion (11) to be supplied to the inverter (45), from the inverter (45) to the supply portion (52, 53), and from the supply portion (52, 53) to the motor generator (21, 22) and to return from the motor generator (21, 22) to the accumulation portion (11), wherein:
the electric transmission portion (11) and the gear transmission portion (12) are separated from each other,
the accumulation portion is the electric transmission portion (11),
the refrigerant is a lubricant accumulated in the electric transmission portion (11); and
the lubricant accumulated in the electric transmission portion (11) is different from a lubricant accumulated in the gear transmission portion (12).

2. The work vehicle according to claim 1, comprising:
an oil cooler (50) provided on a supply passage (48, 49) for the lubricant from the electric transmission portion (11) to the inverter (45).

## Patentansprüche

1. Arbeitsfahrzeug, umfassend:
einen Motor (5);
eine Fahrvorrichtung (3);
eine Batterie (46);
ein Hybridgetriebe (4), das konfiguriert ist, um Leistung von dem Motors (5) zu variieren und die Leistung an die Fahrvorrichtung (3) abzugeben, wobei das Hybridgetriebe (4) einen elektrischen Getriebeabschnitt (11) beinhaltet, der einen Motorgenerator (21, 22) und einen Zahnradgetriebeabschnitt (12), der einen Zahnradantriebsmechanismus (18, 19, 20, 23, 24, 25) beinhaltet, beinhaltet;
einen Wechselrichter (45), der konfiguriert ist, um den Motorgenerator (21, 22) anzutreiben; und
eine Pumpe (15), die konfiguriert ist, um den Wechselrichter (45) zu kühlen, indem sie dem Wechselrichter (45) ein Kühlmittel zum Kühlen des Motorgenerators (21, 22) zuführt,
einen Speicherabschnitt (11), der konfiguriert ist, um das Kühlmittel zu speichern; und
einen Zufuhrabschnitt (52, 53), der konfiguriert ist, um dem Motorgenerator (21, 22) das Kühlmittel zuzuführen, wobei
die Pumpe (15) konfiguriert ist, um zu bewirken, dass das Kühlmittel in dem Speicherabschnitt (11) dem Inverter (45), von dem Inverter (45) zu dem Versorgungsabschnitt (52, 53) und von dem Versorgungsabschnitt (52, 53) zu dem Motorgenerator (21, 22) zugeführt wird und von dem Motorgenerator (21, 22) zu dem Speicherabschnitt (11) zurückgeleitet wird, wobei:
der elektrische Getriebeabschnitt (11) und der Zahnradgetriebeabschnitt (12) voneinander getrennt sind,
der Speicherabschnitt der elektrische Getriebeabschnitt (11) ist,
das Kühlmittel ein Schmiermittel ist, das in dem elektrischen Getriebeabschnitt (11) gespeichert ist; und
das Schmiermittel, das in dem elektrischen Getriebeabschnitt (11) gespeichert ist, sich von einem Schmiermittel unterscheidet, das in dem Zahnradgetriebeabschnitt (12) gespeichert hat.

2. Arbeitsfahrzeug nach Anspruch 1, umfassend:
einen Ölkühler (50), der an einem Zufuhrkanal (48, 49) für das Schmiermittel von dem elektrischen Getriebeabschnitt (11) zu dem Wechselrichter (45) bereitgestellt ist.

## Revendications

1. Véhicule de travail comprenant :
un moteur (5) ;
un dispositif de déplacement (3) ;
une batterie (46) ;
une transmission hybride (4) configurée pour faire varier la puissance provenant du moteur (5) et délivrer la puissance au dispositif de déplacement (3), la transmission hybride (4) comportant une partie de transmission électrique (11) comportant un groupe convertisseur (21, 22), et une partie de transmission à engrenages (12) comportant un mécanisme d'entraînement à engrenages (18, 19, 20, 23, 24, 25) ;
un inverseur (45) configuré pour entraîner le groupe convertisseur (21, 22) ; et
une pompe (15) configurée pour refroidir l'inverseur (45) en fournissant, à l'inverseur (45), un réfrigérant destiné à refroidir le groupe convertisseur (21, 22) ;
une partie d'accumulation (11) configurée pour stocker le réfrigérant ; et
une partie d'alimentation (52, 53) configurée pour fournir le réfrigérant au groupe convertisseur (21, 22), dans lequel
la pompe (15) est configurée pour permettre au réfrigérant dans la partie d'accumulation (11) d'être fourni à l'inverseur (45), de l'inverseur (45) vers la partie d'alimentation (52, 53), et de la partie d'alimentation (52, 53) vers le groupe convertisseur (21, 22) et pour le faire revenir du groupe convertisseur (21, 22) vers la partie d'accumulation (11), dans lequel :
la partie de transmission électrique (11) et la partie de transmission à engrenages (12) sont séparées l'une de l'autre,
la partie d'accumulation est la partie de transmission électrique (11),
le réfrigérant est un lubrifiant accumulé dans la partie de transmission électrique (11) ; et
le lubrifiant accumulé dans la partie de transmission électrique (11) est différent d'un lubrifiant accumulé dans la partie de transmission à engrenages (12).

2. Véhicule de travail selon la revendication 1, comprenant :
un refroidisseur d'huile (50) prévu sur un passage d'alimentation (48, 49) pour le lubrifiant entre la partie de transmission électrique (11) et l'inverseur (45).
